Europäisches Patentamt

European Patent Office

Office européen des brevets

(19)

(11) Numéro de publication: **0 063 996
B1**

# (12)      FASCICULE DE BREVET EUROPEEN

(45) Date de publication du fascicule du brevet:
**31.10.84**

(51) Int. Cl.³: **B 05 B  13/06**, B 05 B  13/02

(21) Numéro de dépôt: **82400675.3**

(22) Date de dépôt: **15.04.82**

(54) **Machine de dépôt en continu, d'un revêtement sur des pièces de révolution.**

(30) Priorité: **15.04.81  FR 8107591**

(43) Date de publication de la demande:
**03.11.82 Bulletin 82/44**

(45) Mention de la délivrance du brevet:
**31.10.84 Bulletin 84/44**

(84) Etats contractants désignés:
**CH DE GB IT LI**

(56) Documents cités:
**FR - A - 2 413 295
US - A - 2 383 023
US - A - 3 989 001**

(73) Titulaire: **MANUFACTURE DE MACHINES DU
HAUT-RHIN S.A. (MANURHIN), 10, rue de Soultz,
F-68100 Mulhouse (FR)**

(72) Inventeur: **Rinck, Jean-Charles, 25, avenue Roger
Salengro, F-68100 Mulhouse (FR)**
Inventeur: **Lecomte, Alain Michel, 30 rue Daguerre,
F-68100 Mulhouse (FR)**

(74) Mandataire: **Corre, Jacques Denis Paul et al, Cabinet
Regimbeau 26, Avenue Kléber, F-75116 Paris (FR)**

BUNDESDRUCKEREI BERLIN

## Description

La présente invention concerne le dépôt d'un revêtement sur des pièces de révolution sur une machine travaillant en continu, c'est-à-dire comportant un barillet sur lequel les pièces à revêtir sont amenées en succession régulière, chaque pièce entrant dans un poste de revêtement et subissant une opération de revêtement pendant une partie de la rotation du barillet, et ressortent en succession régulière après traitement.

Le revêtement envisagé selon l'invention est par exemple un vernissage, une enduction de colle selon un anneau, mais il peut s'agir de toute autre opération de revêtement.

L'invention sera décrite plus précisément à propos du vernissage intérieur de douilles de munitions, mais elle est utilisable dans bien d'autre cas de revêtement intérieur ou extérieur de corps de révolution, et notamment lorsqu'il est nécessaire de respecter des tolérances précises sur la qualité (uniformité d'épaisseur) du revêtement.

On a déjà proposé des machines (FR-A-2 413 295, US-A-3 989 001) dans lesquelles la pièce de révolution est maintenue en orientation et en position et est entraînée en rotation sur elle-même, par simple friction de la pièce ou d'une broche la portant contre une garde de guidage généralement fixe et du fait de la rotation du barillet. Cette rotation des pièces sur elles-mêmes assure une bonne uniformisation de la couche de vernis; cependant, de telles machines ne donnent pas entière satisfaction.

En particulier de telles machines n'ont pas résolu, de façon satisfaisante, les problèmes dûs à l'arrêt de la machine qui sont fréquemment posés dans le traitement en continu. De tels arrêts peuvent être dûs à une panne des moyens d'entraînement de la machine ou même être volontairement provoqués pour assurer la maintenance ou une modification de réglage de la machine, ou éventuellement repositionner correctement l'une des pièces.

Il serait souhaitable que les pièces en cours de revêtement au moment où le barillet s'arrête continuent à subir, jusqu'à la fin, l'opération de revêtement commencée; dans tous les cas, il faut éviter d'avoir à mettre au rebut des pièces incomplètement traitées parce qu'elles ont été arrêtées pendant le traitement et que celui-ci ne peut être repris à un point intermédiaire.

Le problème ainsi posé est très fréquent dans le cas du vernissage: si celui-ci se fait incomplètement pour une pièce par suite de l'arrêt du barillet dans une position telle que cette pièce soit en cours de vernissage, le vernis risque de sécher aussi bien sur la pièce que dans la buse d'injection de vernis et on ne peut poursuivre l'opération sans mettre au rebut la pièce.

La présente invention vient résoudre ce problème en proposant une machine dans laquelle au moins dans une partie de la zone de traitement, la pièce est mise en rotation sur elle-même par friction directe, ou par friction d'une broche qui la porte, sur une bande mobile entraînée en mouvement par un moyen d'entraînement tel que même si le barillet s'arrête, la pièce continue à tourner sur elle-même sous l'effet de la friction de la bande mobile.

Plus précisément, la machine de traitement en continu selon l'invention peut être définie comme comprenant un barillet tournant pourvu à sa périphérie d'une pluralité de logements ou de broches supports pour des pièces de révolution et de postes de revêtement correspondant chacun à un logement ou une broche et répartis comme eux à la périphérie du barillet. Au moins dans la zone de revêtement, la garde de guidage est constituée par une bande sans fin suivant sensiblement la périphérie du barillet et entraînée en mouvement par un moyen d'entraînement de façon à imprimer aux pièces de révolution un mouvement de rotation par friction, même si le barillet est arrêté, à une vitesse angulaire voisine de celle à laquelle elles sont entraînées longue le barillet tonne à vitesse normale, et dans le même sens.

Les postes de revêtement sont commandés de façon à effectuer une opération de revêtement pendant qu'ils se situent dans la zone de revêtement formant un secteur angulaire fixe autour du barillet, secteur situé entre une zone d'amenée de pièces non revêtues et une zone d'évacuation de pièces revêtues. Les pièces sont montées de manière à pouvoir tourner librement sur elles-mêmes, par rapport au barillet, afin d'être mises en rotation sur elles-mêmes par friction sur la garde de guidage, directement ou par l'intermédiaire de broches les portant.

Ainsi, en marche normale, le revêtement considéré, par exemple un vernissage, s'effectue uniformément avec une rotation permanente des pièces sous l'effet conjoint de la rotation du barillet et du mouvement de la bande; si le barillet s'arrête, le revêtement s'effectue encore avec rotation des pièces sur elles-mêmes, due à l'action de la bande mobile.

Le mode et la vitesse d'entraînement de la bande mobile peuvent être déterminés en fonction de la précision requise pour la durée du revêtement et la vitesse à laquelle il doit s'effectuer.

Dans le cas où le revêtement ne demande pas une très grande précision, il suffit que la bande soit entraînée à une vitesse telle que lorsque le barillet est arrêté, elle entraîne les pièces de révolution en rotation sur elles-mêmes à une vitesse angulaire voisine de celle à laquelle elles sont entraînées lorsque le barillet tourne à vitesse normale, sans cependant augmenter trop la vitesse de la bande.

Si le revêtement doit être plus précis, on peut prévoir deux vitesses d'entraînement de la bande:

— une vitesse lente lorsque le barillet est en rotation,

— une vitesse rapide lorsqu'il est à l'arrêt, de façon à obtenir la même vitesse de rotation de la pièce par rapport au barillet dans les deux cas.

Une logique de commande assure le passage automatique de la vitesse lente à la vitesse rapide lorsque le barillet passe de la marche à l'arrêt, et inversement.

Si la précision de la longueur de dépôt du vernis doit être rigoureuse, on utilise alors un asservissement pour l'entraînement de la bande, permettant de réguler constamment sa vitesse en fonction de la vitesse de rotation du barillet, que ce soit dans les phases d'accélération au démarrage, ou de ralentissement à l'arrêt, ou pendant des phases de marche au ralenti, par exemple pour le réglage de la machine de traitement.

Cet entraînement permet de rendre la vitesse de rotation de la pièce par rapport au barillet indépendante de la rotation de celui-ci et donc constante par rapport au poste de traitement.

Un mode de réalisation de cet asservissement consiste à utiliser un différentiel comportant:

— à l'entrée, un entraînement indépendant du barillet,
— à une première sortie, une poulie d'entraînement de la bande,
— à une seconde sortie, une liaison en rotation avec le barillet, de rapport adéquat.

Si le barillet ralentit ou s'arrête, la sortie du différentiel qui lui est liée faisant de même, l'autre sortie portant la poulie d'entraînement de la bande accélère et tourne plus vite, compensant ainsi exactement, complètement et automatiquement les variations de vitesse du barillet et permettant de garder une vitesse rigoureusement constante de rotation de la pièce sur elle-même par rapport au barillet.

D'autres caractéristiques et avantages de l'invention apparaîtront à la lecture de la description détaillée qui suit et qui est faite en référence aux dessins annexés dans lesquels:

la figure 1 représente une vue en coupe transversale d'un exemple de machine de vernissage en continu à laquelle la présente invention est particulièrement applicable, en coupe suivant la ligne I-I de la figure 3.

la figure 2 représente un schéma synoptique des circuits pneumatiques assurant la commande d'admission de vernis vers les postes de vernissage du barillet,

la figure 3 représente, en vue de dessus schématique, la disposition selon l'invention consistant à prévoir un moyen de mise en rotaation des pièces dans la zone de vernissage.

la figure 4 représente en vue de dessus la disposition selon l'invention consistant à prévoir un moyen de mise en rotation des pièces capable d'assurer une vitesse de rotation constante de la pièce par rapport au barillet,

la figure 5 est une vue de face correspondant à la figure 4, et

la figure 6 représente une vue de face d'une machine selon l'invention comportant d'autres moyens d'entraînement des pièces en rotation.

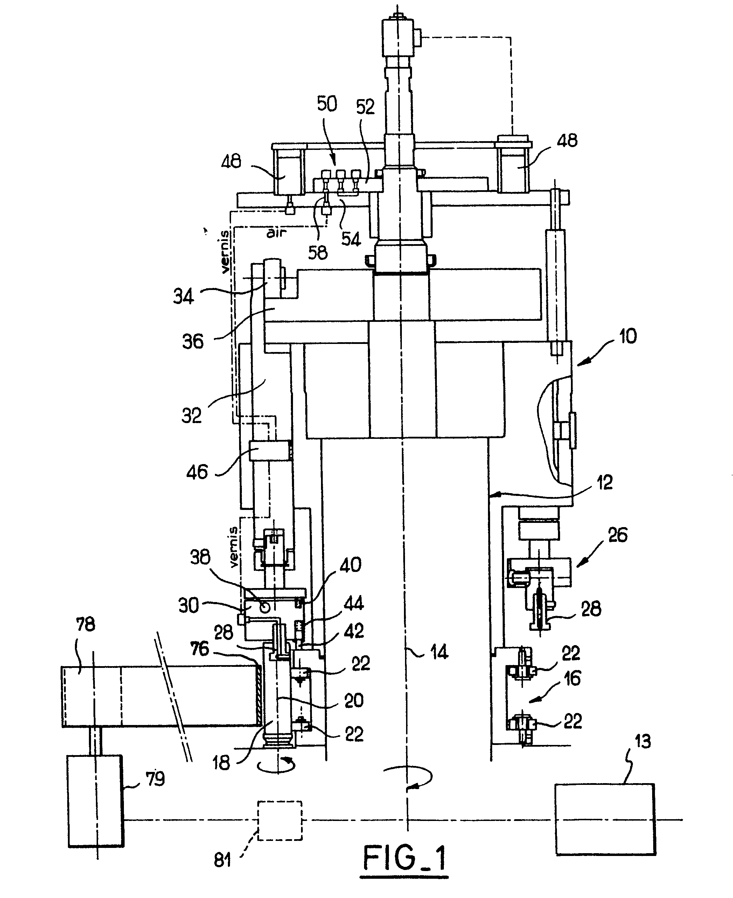

La machine de vernissage en continu représentée sur la figure 1 comporte un barillet 10 entraîné en rotation continue par un arbre 12 d'axe de rotation 14, sous l'action de moyens d'entraînement tels qu'un moteur schématisé en 13. Le barillet porte à sa périphérie une pluralité d'emplacements de réception de pièces, régulièrement répartis; chaque emplacement ou logement 16 est susceptible de recevoir une pièce et de la maintenir dans une position et une orientation bien déterminées pendant la rotation du barillet.

Les pièces 18, susceptibles de venir prendre place dans les logements 16, sont des pièces de révolution et sont orientées dans ces logements avec leur axe 20 parallèle à l'axe 14 du barillet.

Les pièces 18 viennent s'appliquer dans les emplacements 16 contre des galets 22 montés libres de rotation dans ces emplacements autour d'axes parallèles à l'axe du barillet. Ces galets 22 constituent la limite radialement la plus à l'intérieur des emplacements 16 et les pièces de révolution 18 peuvent tourner librement autour de leur axe 20 en s'appliquant contre les galets fous 22.

La limite extérieure radiale des logements ou emplacements 16 est constituée par une garde de guidage 24 qui court autour du barillet en empêchant que les pièces 18 sortent des emplacements qui leur sont attribués autour du barillet. La garde de guidage 24 est fixe, c'est-à-dire qu'elle ne tourne pas avec le barillet. Elle est interrompue au niveau d'une zone d'entrée de pièces par laquelle s'effectue l'introduction des pièces sur le barillet, et au niveau d'une zone de sortie de pièces où s'effectue l'évacuation des pièces traitées (dans le cas tout au moins où l'introduction et l'évacuation se font latéralement par rapport au barillet, sans changement de niveau des pièces entre leur point d'introduction et le trajet qu'elles effectuent en tournant avec le barillet).

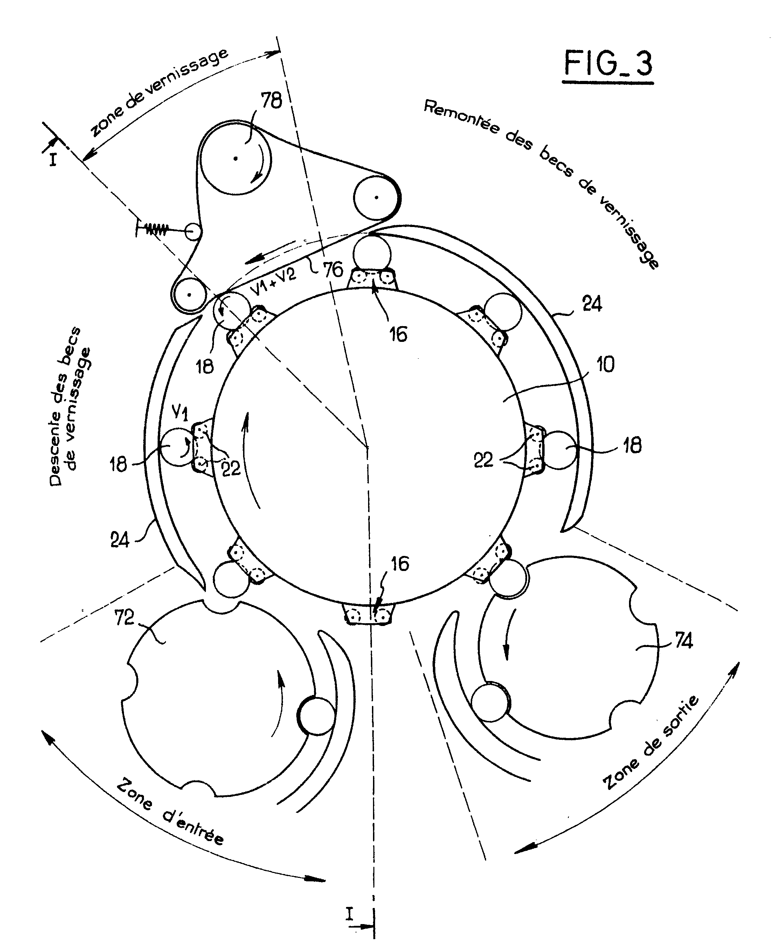

Une vue de dessus schématique de la machine conforme à la présente invention est représentée sur la figure 3. Les pièces 18 sont régulièrement réparties autour du barillet 10 dans les logements ou emplacements 16; le positionnement et l'orientation des pièces 18 sont assurés d'un côté par les galets fous 22 et de l'autre par les gardes de guidage fixes 24 entourant le barillet et maintenant les pièces 18 appliqueées contre les galets fous 22.

La zone comprise entre la zone d'entrée et la zone de sortie, dans le sens de rotation du barillet, est une zone de travail au milieu de laquelle est prévue une zone qu'on appellera la zone de vernissage, sans que cette dénomination soit limitative, c'est-à-dire la zone au niveau de laquelle le revêtement est appliqué à une pièce; dans le cas d'une application au vernissage, des becs de vernissage qui seront décrits plus en détail dans la suite de la description sont introduits dans les pièces juste en amont de cette zone, et ils en sont retirés juste en aval, avant que les pièces soient évacuées.

Dans le cas représenté, l'introduction et l'évacuation de pièces se font à l'aide d'une roue d'entrée à alvéoles 72 et d'une roue de sortie à alvéoles 74 qui se situent au niveau (horizontalement) du trajet des pièces 18.

Les pièces 18, formées de corps de révolution dont l'axe est parallèle à celui du barillet, peuvent être mises en rotation sur elles-mêmes simplement par application avec friction contre les gardes de guidage 24, la rotation du barillet entraînant un roulement des pièces 18 sur la garde avec une vitesse V1 (vitesse angulaire).

Pour éviter que les pièces 18 situées dans la zone de vernissage cessent de tourner sur elles mêmes et subissent de ce fait un revêtement non uniforme au cas où le barillet viendrait à ralentir ou s'arrêter alors que le traitement est inachevé, on prévoit, selon le mode de réalisation représenté sur la figure 3, que dans la zone de vernissage proprement dite, un système, indépendant de la rotation du barillet, assure une rotation sur elles-mêmes des pièces situées dans cette zone. Ce système est constitué par une bande mobile 76 suivant approximativement le trajet périphérique des gardes de guidage 24 de manière à les prolonger dans la zone de vernissage, les gardes elles-mêmes étant supprimées au niveau de cette zone de vernissage. Les pièces 18 viennent s'appliquer contre cette bande 76 lorsqu'elles sont entraînées par le barillet dans la zone de vernissage. La bande 76 est une bande sans fin mobile entraînée en translation sur elle-même en continu, à vitesse constante, par un moyen 78 tel qu'une roue de sortie d'un moteur 79 et elle exerce une friction sur les pièces 18 situées dans la zone de vernissage de sorte que si le barillet est arrêté, une pièce 18 située dans la zone de vernissage est entraînée en rotation par la bande 76 avec une vitesse V2 (roulement sans glissement de la pièce 18 sur la bande 76).

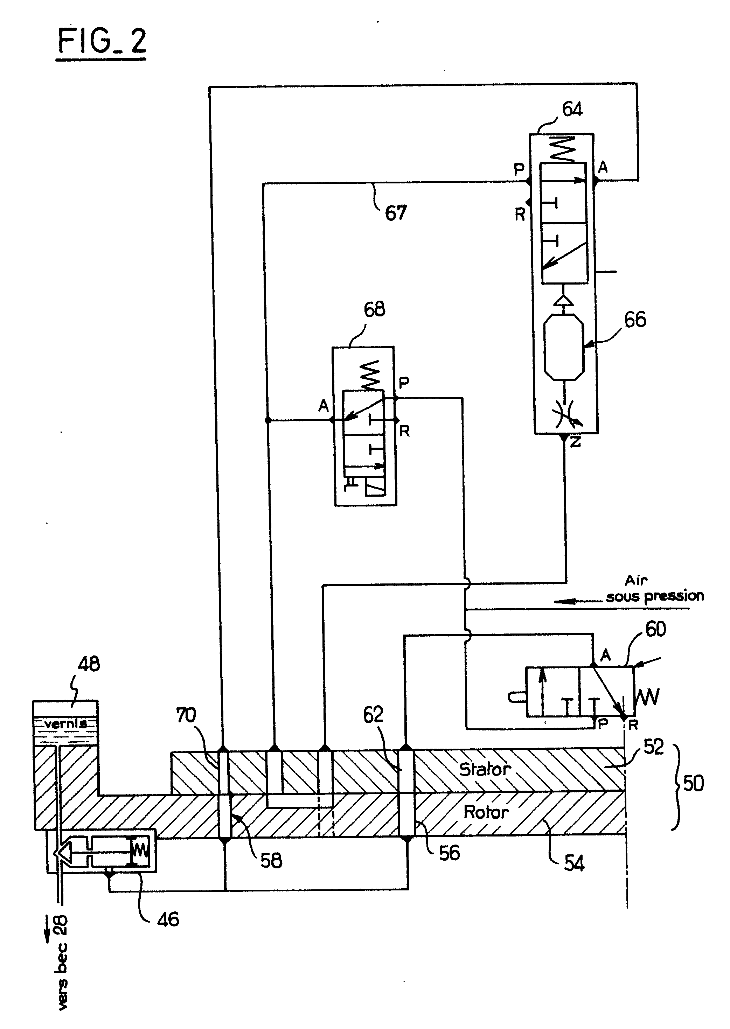

Ainsi, en cas d'arrêt du barillet alors qu'une opération de revêtement est déjà sommencée pour une pièce 18, cette opération se poursuit sur la pièce entraînée en rotation sur elle-même et l'uniformisation du traitement est donc assurée comme si le barillet tournait; l'opération s'arrête au bout d'une durée déterminée par un temporisateur 66 qui sera décrit en référence à la figure 2.

Il est souhaitable que la vitesse de rotation sur elle-même de la pièce 18 située dans la zone de vernissage soit du même ordre de grandeur dans le cas où le barillet est arrêté et dans le cas où il est entraîné en rotation à sa vitesse normale. Cette vitesse normale de rotation du barillet est généralement imposée et il faut fonc choisir la vitesse de défilement de la bande 76 selon certaines conditions pour avoir une vitesse de rotation sur elle-même de la pièce 18 dans la zone de vernissage acceptable dans tous les cas: cette vitesse de rotation sur elle-même dans la zone de vernissage est égale à $\overline{V1} + \overline{V2}$ où V1 peut varier entre zéro et la vitesse qui est imprimée à la pièce 18 par la seule rotation du barillet à sa vitesse normale, du fait de la friction contre la garde fixe 24 ou contre la bande 76 supposée à l'arrêt, et où V2 est la vitesse imprimée à la pièce 18 par la seule vitesse de défilement de la bande 76, le barillet étant supposé à l'arrêt.

En fait, si V1 est la composante de vitesse imprimée à la pièce par le barillet lui-même, en supposant qu'il tourne à vitesse normale et qu'il coopère avec une garde de friction fixe ou la bande 76 supposée arrêtée et si V2 est la composante de vitesse imprimée au corps par la bande de friction mobile seule, en supposant que le barillet est arrêté, on peut dire que les vitesses de rotation des pièces dans la zone de vernissage se situeront dans une gamme comprise entre V2 et V1 + V2 (barillet et bande tendant chacun indépendamment à faire tourner les pièces dans le même sens comme illustré à la figure 3) ou entre V2 et V2 − V1 (barillet et bande agissant en sens contraire, c'est-à-dire que les sens de défilement de la bande et du barillet dans la zone de vernissage seraient identiques).

Le rapport (V1 + V2)/V2 dans le premier cas, ou V2/(V2 − V1) dans le second cas doit donc être aussi voisin que possible de l'unité, tout en correspondant toutefois à une vitesse raisonnable pour le défilement de la bande de friction, puisque dans la théorie, il faudrait une très grande vitesse V2, due à l'entraînement par la bande, pour rapprocher les rapports ci-dessus de l'unité. En outre, lorsque le barillet et la bande tendent chacun indépendamment à faire tourner les pièces en sens contraire, il faut que V2 soit supérieure à V1 pour éviter und inversion du sens de rotation des pièces sur elles-mêmes dans la zone de vernissage en cas d'arrêt du barillet; on notera qu'alors les pièces peuvent subir une inversion de ce sens de rotation lorsqu'elles quittent la garde fixe 24 pour entrer en contact avec la bande 76 ou lorsqu'elles quittent le contact avec cette dernière pour entrer en contact à nouveau avec la garde fixe 24, lors de la rotation du barillet, mais cette inversion ne présente pas d'inconvénient dans la mesure où elle correspond à un état transitoire en dehors duquel s'effectue l'opération de revêtement.

En pratique, on choisira de préférence le premier cas qui donne un rapport de vitesse plus proche de l'unité pour une même vitesse de défilement de la bande et on choisira V2 au moins égale à V1 pour avoir un rapport inférieur ou égal à 2 entre les vitesses de rotation des pièces en marche normale du barillet et en cas d'arrêt du barillet, tout en conservant une vitesse modérée de translation de la bande de friction et de rotation des pièces; il ne serait pas souhaitable en effet d'avoir une vitesse de rotation des pièces sur elles-mêmes trop élevée.

On comprendra qu'on peut augmenter ou diminuer à volonté V2, la vitesse normale du barillet étant supposée imposée, pour établir un compromis entre la vitesse maximale de rotation souhaitée pour les pièces et les vitesses de rotation de celles-ci en présence ou en l'absence de rotation du barillet. Par exemple, si on ne veut pas dépasser pour les pièces une vitesse de rotation de 1,5 fois V1, on prendra $V_1 < V_2 \leq 1,5\ V1$ et on fera agir barillet et bande en sens inverse sur la rotation des pièces, ou bien $V2 \leq 0,5\ V1$ en faisant agir barillet et bande dans le même sens. Ainsi le rapport des vitesses de rotation des pièces en l'absence ou en présence d'une rotation du barillet sera de 3.

Si on ne veut pas dépasser 2 pour ce rapport, on pourra choisir une vitesse de translation de la bande sur elle-même telle que $V2 \geq V1$ (même sens d'action de la bande et du barillet) ou $V2 \geq 2V1$ (sens contraire).

On voit de ce qui précède qu'un exemple de compromis susceptible d'être adopté consisterait à prendre $V2 = V1$ avec un sens de défilement de la bande 76 opposé à celui du barillet (bande et barillet agissant donc dans le même sens sur la rotation des pièces); en effet, dans ce cas on a, à la fois, un bon rapport entre les vitesses de rotation de pièces avec et sans rotation du barillet et on évite de faire tourner trop vite les pièces (vitesse maximale 2V1). Un autre compromis pourrait consister à prendre $V2 = 2V1$ avec un défilement de bande dans le même sens que celui du barillet: on obtiendrait les mêmes résultats que précédemment mais cela nécessite une vitesse de défilement de la bande deux fois plus élevée.

On comprendra que le calcul exact de la vitesse de défilement de la bande dépend du diamètre des pièces, ainsi que du diamètre du barillet si ce calcul est fait à partir de la vitesse de rotation du barillet.

Selon un autre mode de réalisation de l'entraînement de la bande mobile 76, une logique de commande schématisée en 81 détectant l'arrêt et la mise en marche du barillet assure le passage automatique de la vitesse d'entraînement de la bande entre une vitesse lente lorsque le barillet est en rotation, et une vitesse rapide lorsqu'il est à l'arrêt de façon à obtenir la même vitesse de rotation de la pièce par rapport au barillet dans les deux cas.

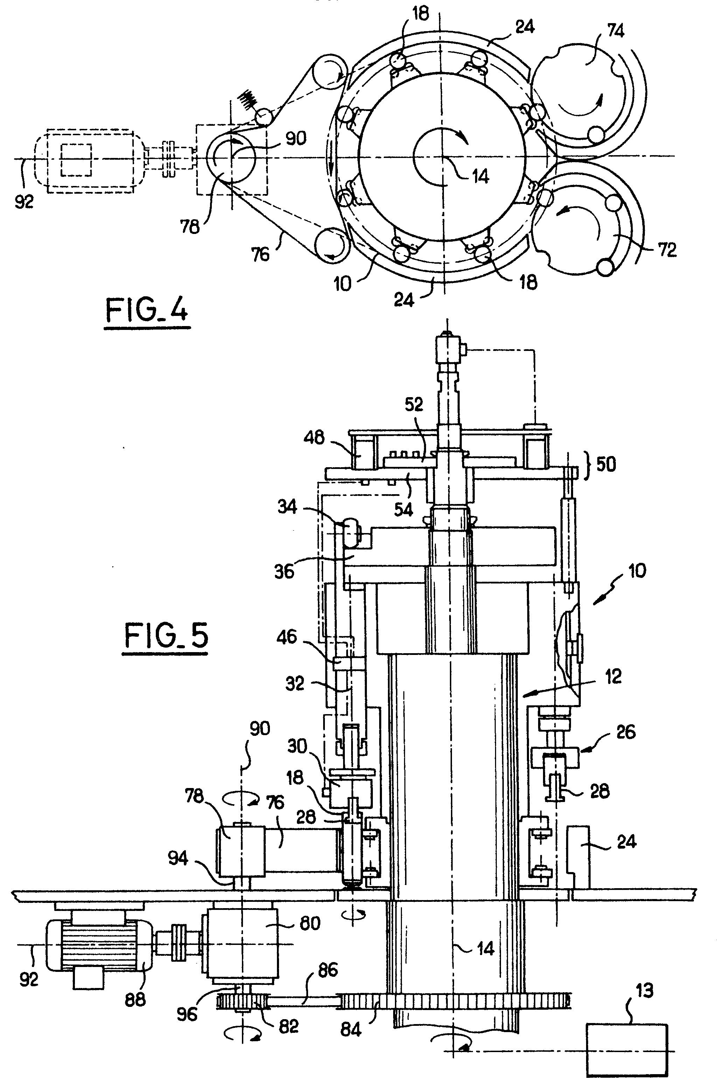

Sur les figures 4 et 5, où l'on retrouve l'ensemble des éléments des figures précédentes à l'exception des éléments 79 et 81 et où l'on a repris les mêmes références qu'à celles-ci pour désigner ces éléments, on a représenté respectivement une vue de dessus et une vue de face schématique d'une machine selon l'invention comportant des moyens d'asservissement pour rendre la vitesse de rotation de la pièce 18 par rapport au barillet 10 constante dans la zone de revêtement, indépendamment de la vitesse de rotation du barillet 10, que cette dernière soit normale, nulle, ou quelconque.

Les moyens d'asservissement représentés sur cette figure constituent un asservissement mécanique; bien entendu, celui-ci sera aisément remplacé par tout dispositif d'asservissement électronique approprié.

Un élément moteur 88 indépendant de celui 13 du barillet est disposé sur l'axe 92 d'entrée d'un élément différentiel 80 et accouplé à celui-ci. Cet élément différentiel 80 est situé également sur l'axe 90 de la roue 78 d'entraînement de la bande d'intraînement 76, la roue d'entraînement 78 étant montée sur un premier arbre de sortie 94 de l'élément différentiel 80.

Une roue 82 est montée sur le second arbre de sortie 96 de l'élément différentiel 80 et est liée en rotation au barillet 10 par l'intermédiaire d'un moyen d'entraînement qui peut être, par exemple, formé d'une courroie crantée 86 et d'une roue 84 d'axe 14, solidaire du barillet; la vitesse de rotation du premier arbre de sortie 94 est ainsi fonction des vitesses de rotation de l'élément moteur 88 et du second arbre de sortie 96.

Ce montage permet de lier et faire varier avec la vitesse de rotation du barillet 10 la vitesse de déplacement de la bande d'entraînement 76.

En choisissant de façon adéquate les dimensions des roues 78, 82 et 84, on peut faire en sorte que la vitesse de rotation de la pièce 18 par rapport au barillet soit indépendante de la vitesse de rotation du barillet 10, comme cela sera démontré ci-dessous.

En effet, les symboles utilisés ci-après ayant les significations suivantes:

$D_G$ = diamètre de roulement de la douille 18 sur la garde de guidage 24,

d = diamètre de la douille 18,

$D_1$ = diamètre de la roue 78,

$D_2$ = diamètre de la roue 82,

$D_B$ = diamètre de la roue 84,

$\omega_M$ = vitesse de rotation du moteur d'entraînement 88,

k = rapport de réduction du différentiel 80,

$\omega_B$ = vitesse de rotation du barillet 10,

$V_B$ = vitessee linéaire de la bande 76,

$\omega_{d/B}$ = vitesse de rotation de la douille 18 par rapport au barillet 10.

On a les relations suivantes:

$$\omega_{d/B} = \frac{1}{d} \frac{D_1 \, \omega_M}{k} + \left( D_G - \frac{D_B D_1}{D_2} \right) \omega_B$$

soit

$$\frac{D_B}{D_2} = \frac{D_G}{D_1}$$

pour que

$$\omega_{d/B} = \text{constante} = \frac{\omega_M D_1}{kd}$$

On peut voir d'après cette relation que la condition préexposée est remplie, en particulier, lorsque les roues 78 et 82 ont même diamètre et la roue 84 a un diamètre égal au diamètre intérieur des gardes 24 (et 76).

Si cette condition est remplie, la valeur de la vitesse de rotation de la douille par rapport au barillet est uniquement fonction des valeurs de d, $D_1$ et k.

De plus, la vitesse linéaire $V_B$ de la bande 76 est donnée par la relation suivante:

$$V_B = \pi \left( \frac{\omega_M D_1}{k} - \omega_B D_G \right)$$

Les valeurs de k (rapport de réduction du différentiel 80) seront aisément déterminées en fonction de chaque cas particulier.

On va maintenant décrire plus en détail les postes de traitement représentés par exemple sur les figures 1 et 5, utilisés pour le traitement des pièces.

La machine représentée sur ces figures permet de traiter des douilles de munitions dont on désire vernir une portion annulaire intérieure qui servira de joint d'étanchéité entre le projectile et la surface intérieure de la douille pour isoler de l'atmosphère extérieure la partie intérieure de la douille.

La machine de traitement représentée sur les figures 1 et 5 comprend, au niveau de chaque logement 16, un poste de revêtement 26 ou »poste de vernissage« qui est apte à effectuer une opération de vernissage pour chaque pièce introduite dans lee logement 16 correspondant. La pièce doit être convenablement introduite dans ce logement pour que l'opération de vernissage puisse commencer; celle-ci dure pendant un temps correspondant à une rotation d'un angle donné du barillet, pour lequel la pièce 18 est déplacée dans une zone angulaire déterminée dite »zone de vernissage« qui est toujours la même, par rapport à un repère fixe, pour toutes les pièces portées par le barillet, c'est-à-dire indépendante de la position angulaire de celui-ci. Cette zone de vernissage peut correspondre par exemple à un angle d'environ 35°. Un système de came, fixe par rapport au barillet, ainsi que des moyens électriques et pneumatiques, contrôlent de manière répétitive le déroulement de l'opération de vernissage à chaque fois qu'un poste de vernissage entre dans la zone de vernissage.

Dans l'exemple représenté, un poste de vernissage 26 comporte un bec de vernissage 28 susceptible de pénétrer à l'intérieur d'une pièce 18, le bec comportant un orifice d'émission de vernis qui débouche en regard de la paroi intérieure de la pièce 18 lorsque le bec est introduit dans la pièce 18. Le bec de vernissage 28 est porté par un bloc de support 30 qui peut see déplacer verticalement parallèlement à l'axe du barillet pour introduire le bec 28 dans la pièce lorsque celle-ci est en place et avant que la pièce ne pénètre dans la zone de vernissage proprement dite. Le bloc 30 est relié à une tige 32 dont l'extrémité comporte un galet 34 roulant sur un chemin de came fixe circulaire 36 qui imprime au galet 34 et donc au bec de vernissage 28 un mouvement de descente avant l'entrée de la pièce dans la zone de vernissage, et un mouvement de remontée après la sortie de cette zone. On peut remarquer que le bloc 30 est monté sur un axe 38 transversal autour duquel il peut pivoter légèrement. Un premier ressort de rappel 40 tend à mettre le bloc 30 dans une position facilitant l'introduction du bec 28 dans la pièce, et un doigt de poussée 42 également rappelé par un ressort 44 rétablit le bloc 30, après l'introduction du bec 28, dans une position où ce bec est appliqué contre la surface intérieure de la douille. Le doigt de poussée 42 prend appui sur une partie fixe solidaire du barillet pour repousser le bloc 30 à l'encontre du ressort 40. L'élasticité du ressort 44, plus fort que le ressort 40, permet de tenir compte éventuellement d'un manque d'uniformité de la surface intérieure de la pièce 18.

Un exemple de schéma de distribution pour établir une séquence de vernissage pour un poste de vernissage 26 est représenté sur la figure 2.

L'admission de vernis dans le bec 28 est provoquée par un clapet pneumatique 46 (un clapet pour chaque poste de vernissage), ce clapet reçoit du vernis d'un réservoir annulaire 48 placé à la partie supérieure du barillet et tournant avec lui, le réservoir pouvant être mis sous pression pour faciliter l'écoulement du vernis jusqu'au bec de vernissage. Le clapet 46 est commandé par une arrivée d'air sous pression en provenance d'un distributeur tournant 50 comprenant une partie fixe ou stator 52 et une partie liée à la rotation du barillet ou rotor 54. Chacune de ces parties comporte des portions de conduits d'air s'étendant soit radialement par rapport à l'axe du barillet, soit circonférentiellement. La mise en regard des différents conduits les uns par rapport aux autres au cours de la rotation du barillet définit une certaine séquence de distribution d'air sous pression vers les clapets 46. En particulier, on peut alimenter le clapet 46 en air sous pression pendant une durée déterminée par la durée de mise en communication d'un conduit du stator et d'un conduit du rotor, cette durée de communication correspondant par exemple à une longueur d'ouverture d'un conduit de la partie fixe ou mobile en regard d'un conduit de l'autre partie. On définit la zone de vernissage proprement dite par la zone le long de laquelle le clapet 46 est ouvert et laisse paser du vernis du réservoir vers le bec 28.

L'arrivée d'air sous pression se fait vers la partie fixe du distributeur tournant 50.

Au niveau de chaque poste de vernissage, des ouvertures 56 et 58 ménagées dans la partie tournante 54, reliées au clapet 46 à commande pneumatique assurent une double commande de celui-ci, d'une part une commande manuelle pour purger le bec de vernissage au démarrage de la machine, et d'autre part une commande cyclique pendant le fonctionnement normal.

Le conduit 56 est susceptible de communiquer avec une valve à actionnement manuel 60 reliée à une source d'air sous pression. Cette communication s'effectue par l'intermédiaire d'un conduit 62 de la partie fixe 52, la durée de communication entre les conduits 56 et 62 étant suffisante pour assurer la purge du bec de vernissage, cette purge s'effectuant seulement si la valve 60 est actionnée.

Le conduit 58 peut communiquer avec la sortie d'un distributeur 64 à commande temporisée par un temporisateur pneumatique 66 qui est réglé pour assurer une injection de vernis pendant une durée déterminée à chaque cycle. La soupape 64 reçoit de l'air sous pression par un conduit 67 provenant de la sortie d'un distributeur 68 à commande èlectrique recevant lui-même de l'air d'une source sous pression. Le distributeur 68 fournit une arrivée d'air sous pression aussi bien à la soupape 64 qu'au temporisateur pneumatique 66, mais pour ce dernier, la liaison se fait à travers le distributeur 50 pour ne déclencher le temporisateur, par une impulsion courte d'air sous pression, qu'à un instant précis, ce déclenchement ayant pour effet d'ouvrir la soupape 64 qui reste ouverte jusqu'à la fin de la durée propre de temporisation du temporisateur 66. La soupape 64 étant ouverte, elle reçoit de l'air sous pression qui est transmis au conduit 58 relié au clapet 46, cette transmission ne s'effectuant que lorsque le distributeur 50 amène le conduit 58 en regard d'un conduit 70 relié à la sortie de la soupape 64.

Le distributeur électrique 68 n'est actionné que dans certaines conditions, en particulier seulement si une pièce est présente dans un logement correspondant à un poste de vernissage; si la pièce est absente, l'impulsion de déclenchement d'ouverture de la soupape 64 n'est pas donnée, le distributeur 68 restant fermé. Le contrôle de la présence ou de l'absence de pièce peut se faire soit sur le barillet soit avant l'introduction des pièces, et l'ouverture du distributeur 68 se fait de manière synchronisée avec la détection de pièce, avec éventuellement un décalage approprié réalisé dans un registre à décalage si la détection se fait avant que la pièce détectée n'arrive dans la zone de vernissage ou avant qu'elle ne soit sur le barillet.

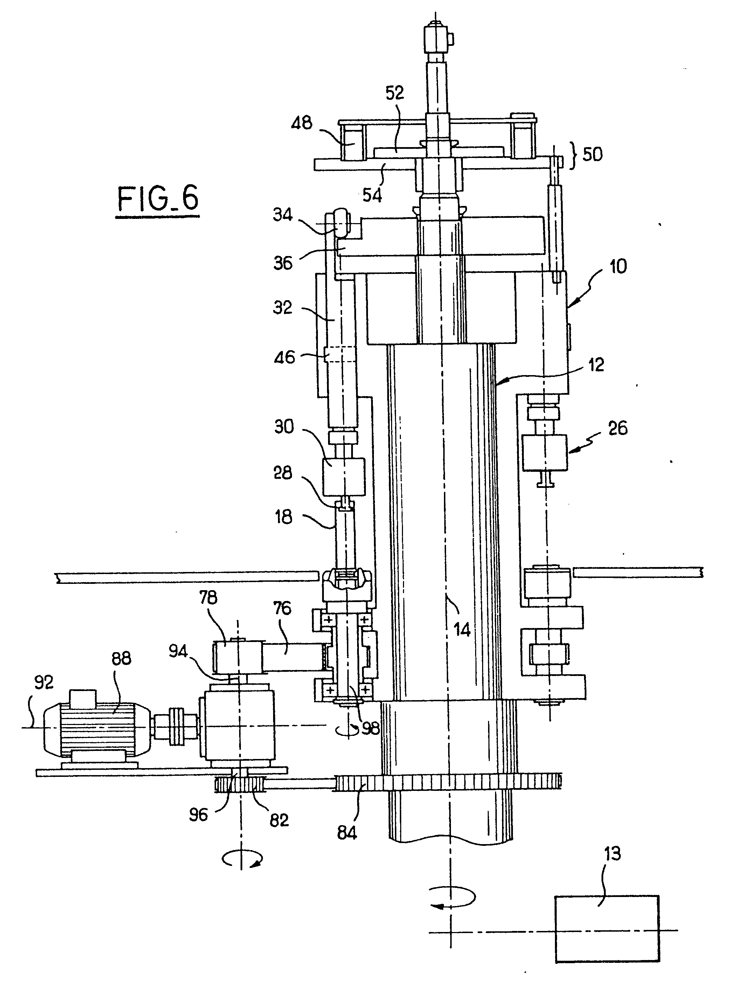

La figure 6 représente une machine qui, pour l'essentiel, correspond à celle des figures 4 et 5 si ce n'est que chaque pièce 18 est montée à la rotation sur elle-même par rapport au barillet par montage sur une brochesupport 98; celle-ci est montée à la rotation sur elle-même par rapport au barillet autour d'un axe parallèle à l'axe 14 de ce barillet, et avec lequel se confond l'axe de la pièce, et les broches 98 sont réparties autour du barillet de la même façon que les logements 16 des modes de réalisation précédemment décrits: au lieu que la pièce 18 soit en contact d'entraînement par friction avec la bande 76 comme il a été décrit précédemment, c'est la broche 98 qui est en contact d'entraînement par friction avec la bande 76, laquelle peut être éventuellement constituée par une courroie; à l'exception de gardes de guidage fixes 24, on retrouve par ailleurs à la figure 6 les mêmes éléments et notamment les mêmes moyens d'entraînement de la bande 76 qu'aux figures 4 et 5, affectés des mêmes références, et la description ci-dessus du mode de réalisation de la machine illustré aux figures 4 et 5 doit être considérée comme reprise ici à propos du mode de réalisation illustré à la figure 6, si ce n'est que le contact d'entraînement par friction entre la bande 76 et les broches 98 remplace l'entraînement par friction directe entre la bande 76 et les pièces 18.

Cependant, les moyens d'entraînement de la bande 76 décrits en référence aux figures 1 et 3 pourraient également être utilisés dans ce cas, et la description du mode de réalisation illustré aux figures 1 et 3 doit être considérée comme concernant également un mode de réalisation de la machine dans lequel la bande 76 serait en contact de friction avec des broches formant supports

pour des pièces comme il est illustré à la figure 6, la vitesse $V_1$ se définissant alors comme la vitesse de rotation sur elle-même imprimée à une pièce par friction de la broche correspondante contre la bande 76 supposée à l'arrêt, le barillet tournant à sa vitesse normale, et $V_2$ comme la vitesse d'une pièce à la rotation sur elle-même du fait du seul défilement de la bande 76 au contact de la broche correspondante, le barillet étant supposé arrêté.

Cet agencement permet d'éviter d'entraîner la pièce par friction sur sa face extérieure et peut donc être utilisé dans le cas où l'effort d'entraînement ne pourrait être obtenu par friction ou bien dans le cas où la face extérieure de la pièce ne peut pas être utilisée pour l'entraînement.

Bien entendu, la présente invention n'est pas limitée aux modes de réalisation qui viennent d'être décrits à partir desquels on pourra prévoir d'autres formes de réalisation adaptées à des applications particulières, sans pour cela sortir du cadre de la présente invention. En particulier, la présente invention serait aisément adaptée pour toutes opérations telles que collage, enduction pour des pièces de révolution telles que douilles de munitions, flacons, cartouches à ancre...

**Revendications**

1. Machine de dépôt en continu d'un revêtement sur des pièces de révolution, du type comprenant un barillet tournant pourvu à sa périphérie d'une pluralité de logements pour les pièces de révolution et de postes de revêtement, à raison d'un poste par logement, aptes à exécuter une opération de revêtement pendant que lesdites pièces de révolution se situent dans une zone de revêtement formant un secteur angulaire fixe autour du barillet, des moyens assurant la liberté de rotation sur elles-mêmes des pièces de révolution au moins dans la zone de traitement, une garde de guidage extérieure au barillet, contre laquelle sont appliquées les pièces de révolution, la garde de guidage étant constituée au moins dans la zone de revêtement par une bande sans fin (76) suivant sensiblement la périphérie du barillet (10) et la bande sans fin possédant un moyen d'entraînement à la translation sur elle-même (78) de façon à imprimer aux pièces de révolution (18) un mouvement de rotation sur elles-mêmes par friction, caractérisée par le fait que la bande (76) est entraînée à une vitesse telle que lorsque le barillet (10) est arrêté, elle entraîne les pièces de révolution (18) en rotation sur elles-mêmes à une vitelle angulaire voisine de celle à laquelle elles sont entraînées lorsque le barillet tourne à vitesse normale, et dans le même sens.

2. Machine selon la revendication 1, caractérisée par le fait que le moyen d'entraînement (78) assurant la translation de la bande sans fin (76) est indépendant des moyens (13) assurant l'entraînement en rotation du barillet (10).

3. Machine selon la revendication 2, caractérisée par le fait que le sens de translation de la bande (76) est opposé au sens de défilement des pièces (18) dans la zone de revêtement, et que la vitesse de translation de la bande est constante et telle que la vitesse de rotation des pièces sur elles-mêmes due à la bande seule, le barillet étant arrêté, soit au moins égale à la vitesse de rotation des pièces sur elles-mêmes due au barillet (10) seul tournant à vitesse normale et à la friction des pièces contre une garde fixe (24) ou la bande (76) supposée à l'arrêt.

4. Machine selon la revendication 2, caractérisée lar le fait que le sens de translation de la bande (76) est le même que le sens de défilement des pièces (18) dans la zone de revêtement, et que la vitesse de translation de la bande est constante et telle que la vitesse de rotation des pièces sur elles-mêmes due à la bande seule, le barillet étant arrêté, soit au moins deux fois plus élevée que la vitesse de rotation des pièces sur elles-mêmes due au barillet (10) seul tournant à vitesse normale, et à la friction des pièces contre une garde fixe (24) ou la bande (76) supposée à l'arrêt.

5. Machine selon la revendication 2, caractérisée par le fait qu'elle comprend en outre une logique de commande (81) détectant l'arrêt et la mise en marche du barillet et assurant le passage automatique de la vitesse d'entraînement de la bande entre une vitesse lente lorsque le barillet est en rotation, et une vitesse rapide lorsqu'il est à l'arrêt de façon à obtenir la même vitesse de rotation des pièces par rapport au barillet dans les deux cas.

6. Machine selon la revendication 1, caractérisée par le fait qu'elle comporte en outre un dispositif d'asservissement assurant une vitesse constante de rotation des pièces de révolution par rapport au barillet, quelle que soit la vitesse de rotation de ce dernier.

7. Machine de traitement en continu selon la revendication 6, caractérisée par le fait que le moyen d'entraînement (78) assurant la rotation des pièces de révolution (18) est solidaire de la première sortie d'un différentiel (80) dont l'entrée est actionnée par un organe d'entraînement indépendant (88) et dont la seconde sortie est liée en rotation avec le barillet (10), les différents éléments intervenant pour assurer la rotation des pièces de révolution étant déterminés de façon à ce que la vitesse de rotation de celles-ci par rapport au barillet soit indépendante de la vitesse de rotation du barillet.

8. Machine de dépôt en continu d'un revêtement sur des pièces de révolution, du type comprenant un barillet tournant pourvu à sa périphérie d'une pluralité de broches-supports pour les pièces de révolution et de postes de revêtement, à raison d'un poste par broche, aptes à exécuter une opération de traitement pendant que lesdites pièces de révolution se situent dans une zone de traitement formant un secteur angulaire fixe autour du barillet, des moyens assurant la liberté de rotation sur elles-mêmes des broches au moins dans la zone de revêtement, une garde de guidage extérieure au barillet, contre laquelle sont appliquées les broches, la garde de guidage étant constituée au moins dans la zone de revêtement par une bande sans fin (76) suivant sensiblement la périphérie du barillet (10) et la bande sans fin possédant un moyen d'entraînement à la translation sur elle-même (78) de façon à imprimer aux broches (98) un mouvement de rotation sur elles-mêmes par friction, caractérisée par le fait que la bande (76) est entraînée à une vitesse telle que lorsque le barillet (10) est arrêté, elle entraîne les broches (98) en rotation sur elles-mêmes à une vitesse angulaire voisine de celle à laquelle elles sont entraînées lorsque le barillet tourne à vitesse normale, et dans le même sens.

9. Machine selon la revendication 8, caractérisée par le fait que le moyen d'entraînement (78) assurant la translation de la bande sans fin (76) est indépendant des moyens (13) assurant l'entraînement en rotation du barillet (10).

10. Machine selon la revendication 9, caractérisée par le fait que le sens de translation de la bande (76) est opposé au sens de défilement des broches (98) dans la zone de revêtement, et que la vitesse de translation de la bande est constante et telle que la vitesse de rotation des broches sur elles-mêmes due à la bande seule, le barillet étant arrêté, soit au moins égale à la vitesse de révolution des broches sur elles-mêmes due au barillet (10) seul tournant à vitesse normale et à la friction des broches contre la bande (76) supposée à l'arrêt.

11. Machine selon la revendication 9, caractérisée par le fait que le sens de translation de la bande (76) est le même que le sens de défilement des broches (98) dans la zone de revêtement, et que la vitesse de translation de la bande est constante et telle que la vitesse de révolution des broches sur elles-mêmes due à la bande seule, le barillet étant arrêté, soit au moins deux fois plus élevée que la vitesse de rotation des broches sur elles-mêmes due au barillet (10) seul tournant à vitesse normale et à la friction des broches contre la bande (76) supposée à l'arrêt.

12. Machine selon la revendication 9, caractérisée par le fait qu'elle comprend en outre une logique de commande (81) détectant l'arrêt et la mise en marche du barillet et assurant le passage automatique de la vitesse d'entraînement de la bande entre une vitesse lente lorsque le barillet est en rotation, et une vitesse rapide lorsqu'il est à l'arrêt de façon à obtenir la même vitesse de rotation des broches par rapport auf barillet dans les deux cas.

13. Machine selon la revendication 8, caractérisée par le fait qu'elle comporte en outre un dispositif d'asservissement assurant une vitesse constante de rotation des broches par rapport au barillet, quelle que soit la vitesse de rotation de ce dernier.

14. Machine selon la revendication 13, caractérisée par le fait que le moyen d'entraînement (78) assurant la rotation des broches (98) est solidaire de la première sortie d'un différentiel (80) dont l'entrée est actionnée par un organe d'entraînement indépendant (88) et dont la seconde sortie est liée en rotation avec le barillet (10), les différents éléments intervenant pour assurer la rotation des broches étant déterminés de façon à ce que la vitesse de rotation de celles-ci par rapport au barillet soit indépendante de la vitesse de rotation du barillet.

## Patentansprüche

1. Kontinuierlich arbeitende Spritzmaschine für Rotationskörper, mit einer sich drehenden Trommel, die an deren Peripherie mit einer Vielzahl von Lagern für die Rotationskörper sowie mit Spritzposten versehen ist, nämlich in einem Verhältnis von einem Spritzposten pro Lager, wobei die Spritzposten so ausgelegt sind, daß sie einen Spritzvorgang ausführen, während sich die Rotationskörper in einer Spritzzone befinden, die rund um die Trommel einen festen Winkelsektor bildet, mit einer Einrichtung, welche die Drehfreiheit der Rotationskörper für sich zumindest in der Behandlungszone sicherstellt, mit einer außerhalb der Trommel vorgesehenen Führungseinrichtung, an welcher die Rotationskörper anliegen, wobei diese Führungseinrichtung zumindest in der Spritzzone durch ein im wesentlichen der Peripherie der Trommel (10) folgendes Endlosband (76) gebildet ist und das Endlosband eine Einrichtung für dessen translatorischen Antrieb aufweist, derart, daß die Rotationskörper (18) für sich durch Reibung in Drehung gesetzt bzw. drehend angetrieben werden, dadurch gekennzeichnet, daß das Endlosband (76) mit einer solchen Geschwindigkeit angetrieben wird, daß dieses, wenn die Trommel (10) arretiert ist, die Rotationskörper (18) für sich mit einer Winkelgeschwindigkeit drehend antreibt, die an jene angrenzt, mit welcher die Rotationskörper (18) angetrieben werden, wenn sich die Trommel (10) mit normaler Geschwindigkeit dreht und in gleicher Richtung.

2. Maschine nach Anspruch 1, dadurch gekennzeichnet, daß die Antriebseinrichtung (78), die für die Translation des Endlosbandes (76) sorgt, unabhängig ist von Einrichtungen (13), die für den Drehantrieb der Trommel (10) sorgen.

3. Maschine nach Anspruch 2, dadurch gekennzeichnet, daß die Richtung der Translation des Bandes (76) der Richtung entgegengesetzt ist, in der sich die Körper (18) in der Spritzzone vorbeibewegen, und daß die Geschwindigkeit der Translation des Bandes konstant ist und so bemessen ist, daß die auf das einzige Band zurückzuführende Drehgeschwindigkeit der Körper für sich bei arretierter Trommel zumindest gleich der Drehgeschwindigkeit der Körper ist, die auf die einzige, sich mit normaler Geschwindigkeit drehende Trommel (10) und die Reibung der Körper an einer ortsfesten Schutzeinrichtung (24) oder an dem Band (76) zurückzuführen ist, die Arretierung des Bandes vorausgesetzt.

4. Maschine nach Anspruch 2, dadurch gekennzeichnet, daß die Richtung der Translation des Bandes (76) die gleiche ist wie die Richtung, in welcher sich die Rotationskörper (18) in der Spritzzone vorbeibewegen, und daß die Geschwindigkeit der Translation des Bandes konstant ist und so bemessen ist, daß die auf das einzige Band zurückzuführende Drehgeschwindigkeit der Körper für sich bei arretierter Trommel wenigstens zweimal größer ist als die Drehgeschwindigkeit der Körper, die auf die einzige, sich mit normaler Geschwindigkeit drehende Trommel (10) und die Reibung der Körper an einer ortsfesten Schutzeinrichtung (24) oder an dem Band (76) zurückzuführen ist, die Arretierung des Bandes vorausgesetzt.

5. Maschine nach Anspruch 2, dadurch gekennzeichnet, daß ferner eine Steuerlogik (81) vorgesehen ist, welche die Arretierung und die Inbetriebnahme der Trommel nachweist und für den automatischen Übergang der Antriebsgeschwindigkeit des Bandes zwischen einer niedrigen Geschwindigkeit bei sich drehender Trommel und einer hohen Geschwindigkeit bei arretierter Trommel sorgt, derart, daß in beiden Fällen die gleiche Drehgeschwindigkeit der Körper in bezug auf die Trommel erreicht wird.

6. Maschine nach Anspruch 1, dadurch gekennzeichnet, daß eine Steuer- bzw. Regeleinrichtung vorgesehen ist, die für eine konstante Drehgeschwindigkeit der Rotationskörper in bezug auf die Trommel sorgt, welche Geschwindigkeit die Trommel auch immer aufweist.

7. Kontinuierlich arbeitende Maschine nach Anspruch 6, dadurch gekennzeichnet, daß die Antriebseinrichtung (78), die für die Drehung der Rotationskörper (18) sorgt, an den ersten Ausgang eines Differentialgetriebes (80) angeschlossen ist, dessen Eingang von einer unabhängigen Antriebseinrichtung (88) betätigt und dessen zweiter Ausgang hinsichtlich der Drehung mit der Trommel (10) verbunden ist, wobei die für die Drehung der Rotationskörper sorgenden verschiedenen intervenierenden Elemente so bestimmt sind, daß die Drehgeschwindigkeit dieser in bezug auf die Trommel von der Drehgeschwindigkeit der Trommel unabhängig ist.

8. Kontinuierlich arbeitende Spritzmaschine für Rotationskörper, mit einer sich drehenden Trommel, die an deren Peripherie mit einer Vielzahl von Spindellagerungen für die Rotationskörper sowie mit Spritzposten versehen ist, und zwar in einem Verhältnis von einem Spritzposten pro Spindel, wobei die Spritzposten so ausgelegt sind, daß sie einen Behandlungsvorgang ausführen, während sich die Rotationskörper in einer Behandlungszone befinden, die rund um die Trommel einen festen Winkelsektor bildet, mit einer Einrichtung, welche die Drehfreiheit der Spindeln für sich zumindest in der Spritzzone sicherstellt, mit einer außerhalb der Trommel vorgesehenen Führungseinrichtung, an welcher die Spindeln anliegen, wobei die Führungseinrichtung zumindest in der Spritzzone durch ein im wesentlichen der Peripherie der Trommel (10) folgendes Endlosband (76) gebildet ist und das Endlosband eine Einrichtung (78) für dessen translatorischen Antrieb aufweist, derart, daß die Spindeln (98) für sich durch Reibung in Drehung gesetzt bzw. drehend angetrieben werden, dadurch gekennzeichnet, daß das Endlosband (76) mit einer solchen Geschwindigkeit angetrieben wird, daß dieses, wenn die Trommel (10) arretiert ist, die Spindeln (98) für sich mit einer Winkelgeschwindigkeit drehend antreibt, die an jene angrenzt, mit welcher sie angetrieben werden, wenn sich die Trommel mit normaler Geschwindigkeit dreht und in gleicher Richtung.

9. Maschine nach Anspruch 8, dadurch gekennzeichnet, daß die Antriebseinrichtung (78), die für die Translation des Endlosbandes (76) sorgt, unabhängig ist von Antriebseinrichtungen (13), die für den Drehantrieb der Trommel (10) sorgen.

10. Maschine nach Anspruch 9, dadurch gekennzeichnet, daß die Richtung der Translation des Bandes (76) der Richtung entgegengesetzt ist, in der sich die Spindeln (98) in der Spritzzone vorbeibewegen, und daß die Geschwindigkeit der Translation des Bandes konstant ist und so bemessen ist, daß die auf das einzige Band zurückzuführende Drehgeschwindigkeit der Spindeln für sich bei arretierter Trommel zumindest gleich der Umdrehungsgeschwindigkeit der Spindeln ist, die auf die einzige, sich mit normaler Geschwindigkeit drehende Trommel (10) und die Reibung der Spindeln an dem Band (76) zurückzuführen ist, die Arretierung des Bandes vorausgesetzt.

11. Maschine nach Anspruch 9, dadurch gekennzeichnet, daß die Richtung der Translation des Bandes (76) die gleiche ist wie die Richtung, in welcher sich die Spindeln (98) in der Spritzzone vorbeibewegen, und daß die Geschwindigkeit der Translation des Bandes konstant ist und so bemessen ist, daß die auf das einzige Band zurückzuführende Umdrehungsgeschwindigkeit der Spindeln für sich bei arretierter Trommel wenigstens zweimal größer ist als die Drehgeschwindigkeit der Spindeln für sich, die auf die einzige, sich mit normaler Geschwindigkeit drehende Trommel (10) und die Reibung der Spindeln an dem Band (76) zurückzuführen ist, die Arretierung des Bandes (76) vorausgesetzt.

12. Maschine nach Anspruch 9, dadurch gekennzeichnet, daß ferner eine Steuerlogik (81) vorgesehen ist, welche die Arretierung und die Inbetriebnahme der Trommel nachweist und für den automatischen Übergang der Antriebsgeschwindigkeit des Bandes zwischen einer niedrigen Geschwindigkeit bei sich drehender Trommel und einer hohen Geschwindigkeit bei arretierter Trommel sorgt, derart, daß in beiden Fällen die gleiche Drehgeschwindigkeit der Spindeln in bezug auf die Trommel erreicht wird.

13. Maschine nach Anspruch 8, dadurch gekennzeichnet, daß eine Steuer- bzw. Regeleinrichtung vorgesehen ist, die für eine konstante Drehgeschwindigkeit der Spindeln in bezug auf die Trommel sorgt, welche Geschwindigkeit die Trommel auch immer aufweist.

14. Maschine nach Anspruch 13, dadurch gekennzeichnet, daß die Antriebseinrichtung (78), die für die Drehung der Spindeln (98) sorgt, an den ersten Ausgang eines Differentialgetriebes (80) angeschlossen ist, dessen Eingang von einer unabhängigen Antriebseinrichtung (88) betätigt und dessen zweiter Ausgang hinsichtlich der Drehung mit der Trommel (10) verbunden ist, wobei die für die Drehung der Spindeln sorgenden verschiedenen intervenierenden Elemente so bestimmt sind, daß die Drehgeschwindigkeit dieser in bezug auf die Trommel von der Drehgeschwindigkeit der Trommel unabhängig ist.

## Claims

1. A machine for the continuous deposition of a coating upon work pieces of revolution, said machine having a rotary drum provided on its periphery with a plurality of seatings for the work pieces of revolution and with coating stations each corresponding to a seating and adapted to carry out a coating operation while the work pieces are located in a coating zone forming a fixed angular sector around the drum, means mounting the work pieces for free rotation upon themselves at least in the treating zone, a guiding guard mounted externally of the drum and engaged by the work pieces, the said guiding guard being constituted at least in the coating zone by an endless belt (76) which substantially follows the periphery of the drum (10), said endless belt (76) comprising means (78) for driving the endless belt for translation upon itself to impart to the work pieces (8) rotation upon themselves by frictional engagement, characterized in that the belt (76) is driven at a speed such that when the drum (10) is stopped, the belt drives the work pieces of revolution (12) for rotation upon themselves at an angular speed near, and in the same direction as, that at which they would have been driven by the drum if it were rotating at its normal speed.

2. A machine according to claim 1, characterized by the fact that the means (78) for driving the endless belt (76) for translation is independent of the means (13) which rotatably drives the drum.

3. A machine according to claim 2, characterized by the fact that the direction of translation of the belt (76) is opposite to the direction of travel of the work pieces (18) through the coating zone, and the speed of translation of the belt is constant and such that the speed of rotation of the work pieces upon themselves by reason of being driven by the belt alone, the drum being stopped, is at least equal to the speed of rotation of the work pieces upon themselves by reason of being driven by the drum (10) only turning at a normal speed and by reason of the friction of the work pieces on a fixed guiding guard (24) or on the belt (76) supposed to be stopped.

4. A machine according to claim 2, characterized by the fact that the direction of translation of the belt (76) upon itself is the same as the direction of travel of the work pieces (18) through the coating zone, and the speed of translation of the belt is constant and such that the speed of rotation of the work pieces upon themselves due only to their being driven by the belt, the drum being stopped, is at least twice the speed of rotation of the pieces upon themselves by reason of being driven only by the drum (10) when the drum turns at its normal speed and by teason of friction of the work pieces on a fixed guiding guard (24) or on the belt (76) supposed to be stopped.

5. A machine according to claim 2, characterized by the fact that it further comprises a command logic (81) which detects the stopping or starting of the drum and assures the automatic transition of the driving speed of the belt between a slow speed, when the drum is rotating, and a rapid speed when the drum is stopped, in such manner as to obtain the same speed of rotation of the work pieces with respect to the drum in both of such modes of operation.

6. A machine according to claim 1, characterized by the fact that it further comprises a slave mechanism which assures a constant speed of rotation of the work pieces with respect to the drum what ever the speed of rotation of the drum is.

7. A machine for continuously treating according to claim 6, characterized by the fact that the driving means (78) which assures the rotation of the work pieces of revolution (18) is affixed to the first branch shaft of a differential gear mechanism (80) the main shaft of which is driven by an independent prime mover (88), and the second branch shaft of which is connected to the drum (10) for rotation therewith, the various elements which interact to assure the rotation of the work pieces of revolution being so constructed and arranged that the speed of rotation of the work pieces with respect to the drum is independent of the speed of rotation of the drum.

8. A machine for the continuous depositing of a coating upon work pieces of revolution, the machine including a rotatable drum provided on its periphery with a plurality of stub shaft supports for the work pieces and with coating stations each corresponding to a stub shaft and adapted to carry out a treating operation while the work pieces of revolution are located in a treating zone which forms a fixed angular sector about the drum, means for mounting the stub shafts for rotation upon themselves at least in the coating zone, a guiding guard disposed exteriorly of the drum against which the stub shafts are thrust, the guiding guard being constituted at least in the coating zone by an endless belt (76) which substantially follows the periphery of the drum (10), and comprises means (78) for driving the belt for translation upon itself in such manner, as to impose upon the stub shafts (98) a rotational movement upon themselves by reason of friction therewith, characterized by the fact that the belt (76) is driven at such a speed that, when the drum is stopped, it drives the stub shafts (98) rotatably upon themselves at an angular speed near, and in the same direction as, that at which they are driven when the drum is turning at a normal speed.

9. A machine according to claim 8, characterized by the fact that the means (78) driving the endless belt (76) for translation is independent of the means (13) which rotatably drives the drum (10).

10. A machine according to claim 9, characterized by the fact that the direction of translation of the belt (76) is opposite to the direction of movement of the stub shafts (98) through the coating zone, and the speed of translation of the belt is constant, and is such that the speed of rotation of the stub shafts upon themselves by reason of their being driven by the belt only, when the drum is stopped, is at least equal to the speed of revolution of the stub shafts upon themselves by the drum (10) alone turning at its normal speed and by the frictional engagement of the stub shafts with the belt (76) supposed to be stopped.

11. A machine according to claim 9, characterized by the fact that the direction of translation of the belt (76) is the same as the direction of movement of the stub shafts (98) through the coating zone, and the speed of translation of the belt is constant and such that the speed of revolution of the stub shafts upon themselves due only to their being driven by the belt, when the drum is stopped, is at least twice the speed of rotation of the stub shafts upon themselves due to their being driven only by the drum (10) turning at its normal speed and by the frictional engagement between the stub shafts and the belt (76) supposed to be stopped.

12. A machine according to claim 9, characterized by the fact that it further comprises a control logic (80) detecting the stoppage and the starting of the drum and assuring the automatic transition of the speed of driving of the belt between a slow speed when the drum is rotating, and a rapid speed when the drum is stopped, in such manner as to obtain the same speed of rotation of the stub shafts with respect to the drum in such two modes of operation.

13. A machine according to claim 8, characterized by the fact that it further comprises a slave mechanism assuring a constant speed of rotation of the stub shafts with respect to the drum, whatever the speed of rotation of the drum is.

14. A machine according to claim 13, characterized by the fact that the driving means (73) assuring the rotation of the stub shafts (98) is fixed to a first branch shaft of a differential (80) of which the main shaft is driven by an independent prime mover (88) and of which the second branch shaft is connected to rotate in synchronism with the drum (10), the various elements which interact to assure the rotation of the stub shafts being so constructed and arranged that the speed of their rotation with respect to the drum is independent of the speed of rotation of the drum.

FIG_1

# FIG. 2

48
vernis

64

67

P        A
R

66

68

A        P
R

Z

Air
sous pression

60
A

P        R

70        62        52        50

Stator

Rotor

58        56        54

46

vers bec 28

FIG_3

zone de vernissage

78

Remontée des becs de vernissage

V1 + V2

76

16

24

18

10

Descente des becs de vernissage

V1

18

22

22

18

24

16

72

74

Zone d'entrée

Zone de sortie

I

FIG_4

FIG_5

FIG_6